# EUROPEAN PATENT SPECIFICATION

(11) **EP 1 810 878 B1**
(45) Date of publication and mention of the grant of the patent: **23.06.2010**
(21) Application number: 05791950.8
(22) Date of filing: 06.09.2005
(51) Int. Cl.: B60P 3/12, B62D 53/08, B60D 1/52

(54) **DEVICE FOR TOWING INDUSTRIAL VEHICLES (TRUCKS), WHICH IS INTENDED FOR THE FIFTH WHEEL OF A TRUCK TRACTOR**
FÜR DIE SATTELKUPPLUNG EINES SATTELSCHLEPPERS BESTIMMTE VORRICHTUNG ZUM SCHLEPPEN VON INDUSTRIEFAHRZEUGEN (LASTWAGEN)
DISPOSITIF DE TRACTION DE VEHICULES INDUSTRIELS (CAMIONS) APPLICABLE A LA CINQUIEME ROUE D'UN PORTEUR-REMORQUEUR

(30) Priority: 13.09.2004 ES 200402178
(43) Date of publication of application: 25.07.2007
(73) Proprietor: Talleres Monrepos S.L., 22193 Arascues (Huesca) (ES)
(72) Inventor: BIELSA AGUASCA, Marcos, Talleres Monrepos, S.L., E-22193 ARASCUES (Huesca) (ES)
(74) Representative: Carpintero Lopez, Francisco
(86) International application number: PCT/ES2005/000483
(87) International publication number: WO 2006/040372

(56) References cited:
- EP-A- 0 270 334
- EP-A- 1 439 113
- EP-A1- 1 439 113
- CA-A1- 1 237 750
- DE-A1- 4 317 237
- DE-U- 1 928 875
- ES-Y- 198 575
- FR-A1- 2 486 467
- GB-A- 1 453 593
- US-A- 3 999 075
- US-A- 5 249 911
- US-A- 5 409 345
- US-A- 5 409 345
- US-A- 5 762 465
- US-A- 5 823 735
- US-A- 5 909 996

## Description

### OBJECT OF THE INVENTION

The present specification relates to an application for a patent of invention, which, as is expressed in the heading thereof, corresponds to a towing mechanism of industrial vehicles (trucks) applicable to the fifth wheel of a tractor trailer whose purpose is that, when properly coupled, it permits the recovery and towing of industrial vehicles that have broken down or had an accident on the road, avoiding the permanent occupation of a tow truck, thus enabling its use for other activities when the mechanism is detached.

### FIELD OF THE INVENTION

This invention is applicable in the industry devoted to the manufacturing of tow trucks, and equipment and devices for the lifting and towing of vehicles, irrespective of the field of use.

### BACKGROUND OF THE INVENTION

At present, the towing of trucks or buses that have broken down or been involved in an accident is performed in the same way as for people carriers, slightly raising the front or rear part of the truck or bus, generally that corresponding to the broken or locked axle, until it is suspended, and simultaneously pulling in the tow direction, enabling the towed vehicles to travel on their remaining axle or axles.

The tow trucks designed to tow other trucks and buses have, in addition to the tow arm, which gives it is name, a mechanism generally consisting of two folding yokes which are disposed on the rear part of the vehicle, and whereon the two wheels of the shaft of the broken-down vehicle rest. Using a suitable system, said yokes are raised until the vehicle is lifted enough to enable a safe towing.

Nevertheless, this system disclosed has the drawback that it should be permanently mounted on the frame /chassis of a truck, it being necessary to exclusively devote the truck to this purpose, so that it is impossible to use it for other activities apart from towing, hampering the amortization and profitability of the vehicle.

Taking this drawback, among many others, into account, is the reason why the present invention has been devised. Indeed, it relates to providing a towing device of industrial vehicles which can be attached and detached to allow the use of the tow vehicle for other activities when it is not being used for this purpose.

As a differentiating characteristic with respect to the others, the towing mechanism of industrial vehicles applicable to the fifth wheel of a tractor trailer, is not installed on the frame / chassis of rigid trucks, but it is coupled to the fifth wheel of tractor trailers, in the same way as with a semitrailer, enabling, in this way, the use of the tractor trailer for other uses by only "detaching" the mechanism.

The applicant has no knowledge of the existence, at present, of any invention with the characteristics indicated as suitable. However, examples of the state of the art can be seen on US 5 409 345, EP 1 439 113 or DE 4 317 237.

### DESCRIPTION OF THE INVENTION

The towing mechanism of industrial vehicles applied to the fifth wheel of a tractor trailer proposed by the invention, is configured in itself as an evident novelty within its multiple fields of application, allowing the use of a tractor trailer as tow truck, thus enabling the use of the vehicle for other activities, which leads to a better amortization and greater profitability.

The towing mechanism of industrial vehicles applied to the fifth wheel of a tractor trailer object of the invention, is constituted by a main frame, a vertical frame, a vehicle support frame and two extending arms. In one variant, these two extending arms are reduced to a single central arm.

The main frame is horizontally arranged and acts as support for the other components. The kingpin which is coupled to the fifth wheel of the tractor trailer is arranged on the lower part of said frame.

The main frame has fastening means to prevent the assembly of the towing mechanism from tilting or rotating with respect to the fifth wheel when it is folded on top of the tractor trailer in working order. Said fastening means are:
- Two pull rods with eye that fix the front part of the main frame to the chassis of the tractor trailer. Their main mission is that the towing mechanism does not rotate on the fifth wheel.
- Two rear supports which are screwed to the rear part of the tractor trailer chassis. Their main mission is that the towing mechanism rests on them and does not tilt on the fifth wheel.

The pull rods and the supports immobilize the towing mechanism in horizontal position when it is folded over the tractor trailer in working order.

The main frame is also provided with a rear underrun protection device, which as its name indicates, prevents, in a case of collision, a vehicle underrunning the rear axle of the tractor trailer that carries the towing mechanism folded over the fifth wheel in working order.

On the main frame, articulated at its back end and actuated by a pair of hydraulic cylinders, tilts the vertical frame, which in the collapsed position of the mechanism remains in horizontal position, resting on the main frame, and once extended, the mechanism remains in vertical position.

The vertical frame, in addition to tilting movement, has vertical displacement movement, when it is extended, to permit the height of the vehicle support frame to be adjusted.

Likewise, the vehicle support frame tilts on the vertical frame, articulated at its lower end and also actuated by a pair of hydraulic cylinders, so that in the collapsed position of the mechanism it is parallel to the vertical frame, and once extended, the mechanism remains in basically horizontal position, slightly above ground level.

The vehicle support frame has two extending telescopic arms which slide under the vehicle which has broken down or had an accident, being adjusted to the most suitable point where the chassis can be anchored by chains, avoiding interference with air boilers, diesel tanks, fuel tanks, etc.

The telescopic arms are independently actuated for a better adaptation to the vehicle which has broken down or had an accident.

In the new variant of the vehicle support frame, these two telescopic arms are replaced by a single central telescopic arm. This achieves that the telescopic arm, when it stretches to pass below the vehicle which has broken down or had an accident, remains right in the central part, avoiding any problems of interference with air boilers, diesel tanks, oil tanks, etc. But the main and most important advantage of being a single telescopic arm is that it permits engaging the vehicles in the rear part. This cannot be achieved with the vehicle support frame which has two telescopic arms, since the outer distance between one telescopic arm and the other is more than the inner distance between the dual wheels of a truck (Back wheels), it being impossible to introduce the vehicle support frame under the truck which is broken down in the rear part.

Engaging a truck from behind is designed for the particular case of tractor trailers obtaining the following advantages:
- The axle that weighs less is raised, the rear axle.
- As the axle which is in the air is the drive shaft (Rear axle) it is not necessary to demount the transmission.
- It is not necessary to unlock the brake actuators to free the vehicle, since the wheels which run on the ground are those of the front axle.

To perform the operation of placing the chains from the end(s) of the telescopic bar(s) to the chassis of the broken down vehicle, and thus be able to lift the front or rear axle (only if it refers to the case of the new variant) of the broken down vehicle, the vehicle support frame has tilt legs which, as their name indicates, allows this frame to tilt on them to approximate the point(s) of the telescopic bar(s) to the chassis of the broken down vehicle and anchoring it with chains and then distancing the point(s) of the chassis and, in this way, tightening the chains at the same time managing to lift the front or rear axle of the broken down vehicle which is resting on the frame.

The vehicle support frame also has adjustable supports to position the wheels of the front axle of the vehicle to be towed. In the case of the new variant of the vehicle support frame, i.e. the one which has a single telescopic arm in the centre, the adjustable supports have the sufficient width to position the dual wheels of a truck rear axle. In this way, it is possible to choose between attaching the vehicle by lifting the front axle, or by lifting the rear axle. The wheel supports guarantee that the vehicle that is going to be towed is perfectly immobilized and anchored to the frame of the towing mechanism, and that it will not move in the event of sharp acceleration or braking.

The outer width defined between the wheel supports can be increased or decreased in accordance with the width of the front axle of the vehicle to be towed. In the event of a new variant of a single telescopic arm in the centre, the outer width can also be increased or decreased in accordance with whether a single wheel or dual wheel axle is positioned on them. The length of the wheel housing can also be modified, placing the anchor rod at one point or another, as suitable, in accordance with the diameter of the wheel of the vehicle to be towed.

The towing mechanism is provided with a brake system to connect to the vehicle to be towed, this brake system comprising:
- A service brake circuit.
- A parking brake circuit.

Using two hoses, one of them feeding the parking brake circuit to unlock and the other feeding the service brake circuit to brake, and a series of adapters connected in the pneumatic air distribution valves to the actuators, it is achieved that the wheels of the vehicle which has broken down or had an accident, which run on the road, brake together when the brake pedal of the tractor trailer is pressed. This system is essential in order to perform a towing operation with total security. In this way it is possible to descend mountain passes with the peace of mind that the broken down vehicle is not going to take over the tractor trailer, since the whole unit will brake at the same time once the brake of the tractor trailer is actuated.

A hoist gear is disposed on the front part of the vehicle support frame for auxiliary tasks of towing and initial approximation of the broken down vehicle to the wheel supports.

### DESCRIPTION OF THE DRAWINGS

To complete the description being made and with the object of helping towards a better understanding of the characteristics of the invention, in accordance with a preferred example of practical embodiment thereof, a set of figures is attached as an integral part of the description, wherein the following has been represented with an illustrative non-limitative character:
Figure 1 shows a profile view of the towing mechanism of industrial vehicles in the collapsed position.
Figure 2 shows a profile view of the towing mechanism of industrial vehicles in the extended position.
Figure 3 shows a profile view of how the towing mechanism of industrial vehicles is arranged on a tractor trailer in the collapsed position.
Figure 4 shows a profile view of the two vehicles (Tractor and the one which has broken down or had an accident) how it performs the towing of the vehicles which have broken down or had an accident.

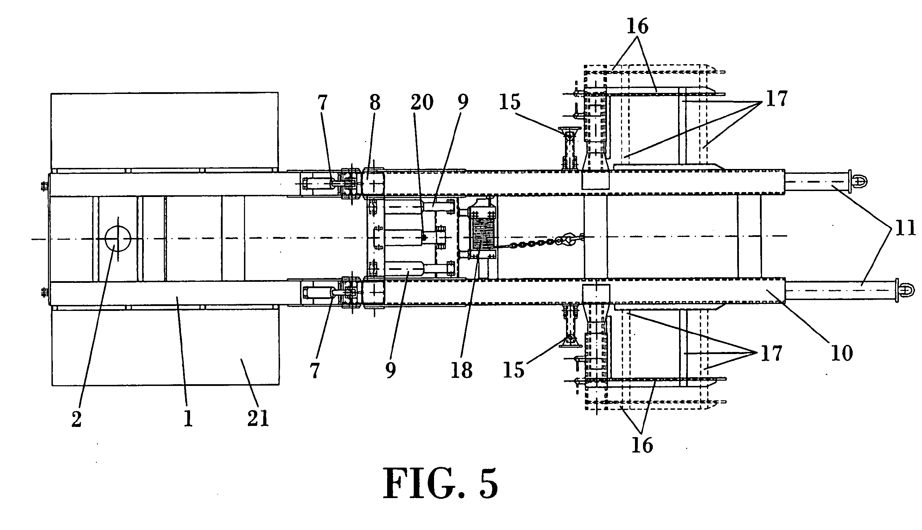

Figure 5 shows a plan view of the towing mechanism where the detail of the different positions wherein the wheel supports of the vehicle support frame can be positioned to adapt to the entire range of axle widths and wheel diameters.
Figure 6 shows a plan view of the towing mechanism showing the new variant of the vehicle support frame with a single telescopic arm in the centre, and with the wheel supports which can be adapted to both the inner width and the outer width, which enables attaching the broken down vehicles to both the front axle, and the rear axle.

### PREFERRED EMBODIMENT OF THE INVENTION

In light of these figures, it can be observed how the towing mechanism of industrial vehicles applied to the fifth wheel of tractor trailers in question, consists of a main frame (1) of mainly rectangular plan made with quadrangular steel profile, which is horizontally disposed and which serves as support for the other components. The kingpin (2), which is coupled to the fifth wheel of the tractor trailer (3), is arranged on the lower part of said frame.

The main frame has fastening means to prevent the assembly of the towing mechanism tilting or rotating with respect to the fifth wheel when it is folded on top of the tractor trailer in working order. Said fastening means are:
- Two pull rods with eye (4) that fix the front part of the main frame to the chassis of the tractor trailer. Their main mission is that the towing mechanism does not rotate on the fifth wheel.
- Two rear supports (5) which are screwed to the rear part of the tractor trailer chassis. Their main mission is that the towing mechanism rests on them and does not tilt on the fifth wheel.

The main frame is also provided with a rear underrun protection device (6), which as its name indicates, prevents, in a case of collision, a vehicle underrunning the rear axle of the tractor trailer that carries the towing mechanism folded over the fifth wheel in working order.

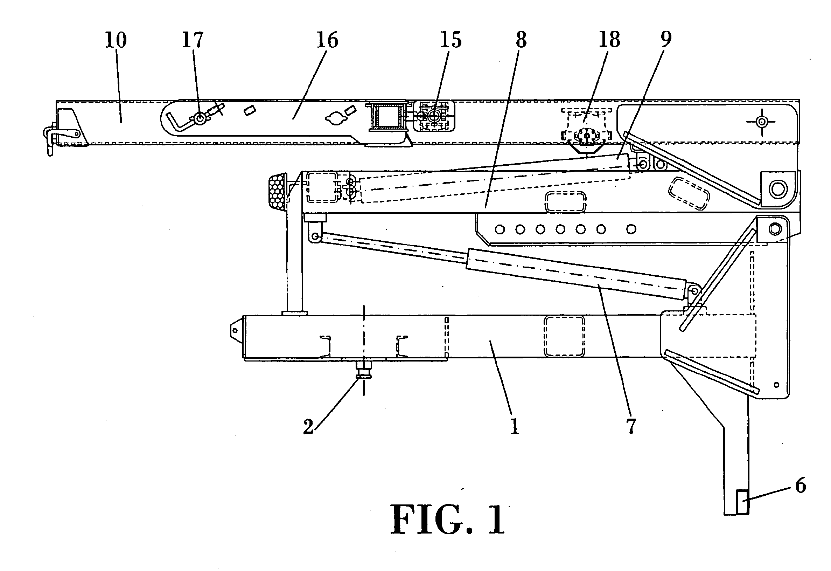

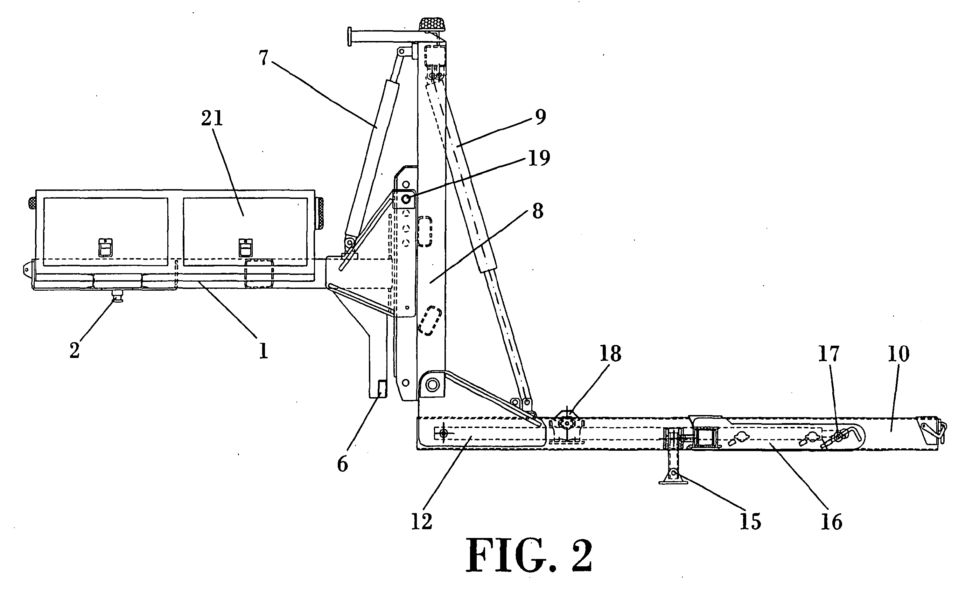

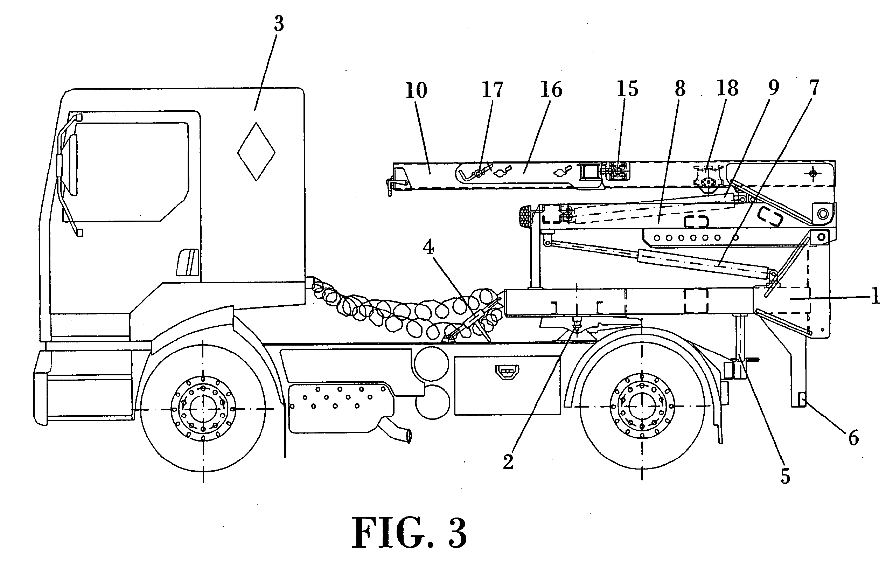

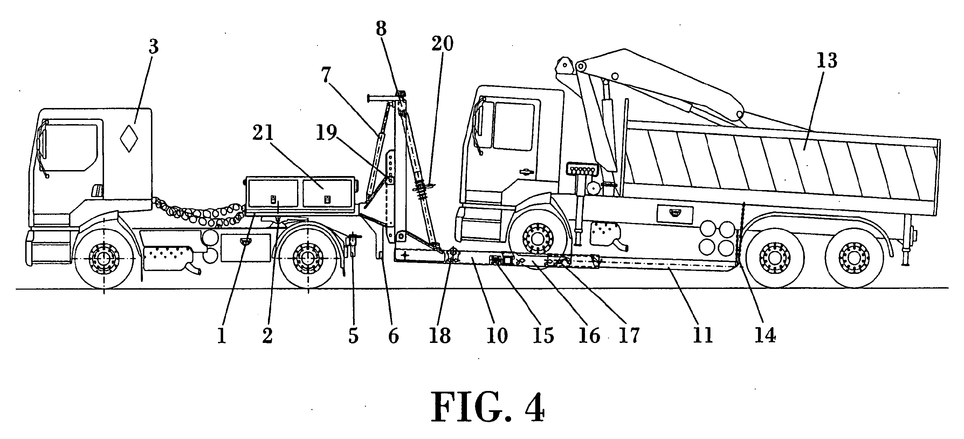

On the main frame, also of mainly rectangular plan and made in steel, articulated at its rear end and actuated by hydraulic cylinders (7), tilts the vertical frame (8), which remains in horizontal position (figures 1 and 3) when the mechanism is collapsed, and vertical (figures 2 and 4) when the mechanism is extended.

On the vertical frame, articulated at its lower end and also actuated by hydraulic cylinders (9), tilts the vehicle support frame (10), so that when the mechanism is collapsed (figures 1 and 3) it remains parallel to the vertical frame, and once extended (figures 2 and 4) it remains in horizontal, or almost horizontal, position, slightly above ground level.

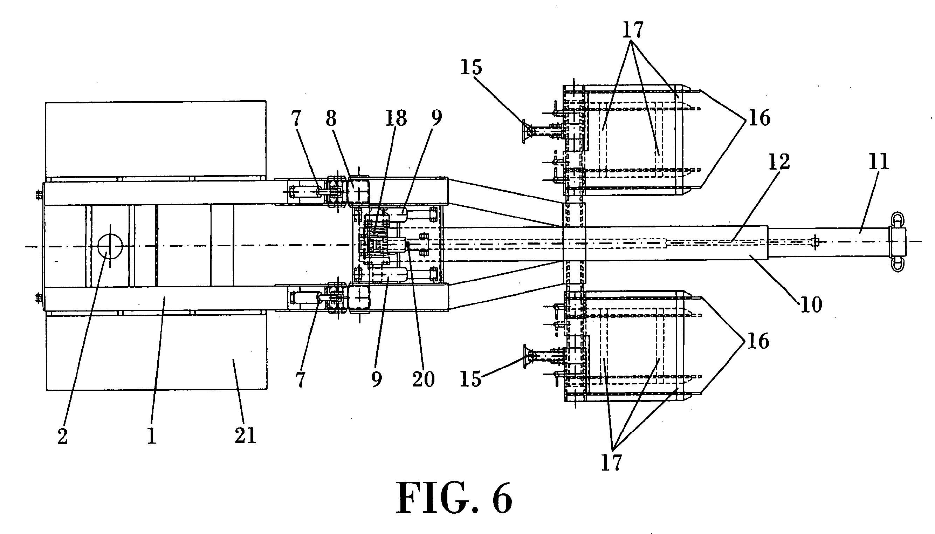

The vehicle support frame has two extending telescopic arms (11), actuated by independent hydraulic cylinders (12). In the case of the new variant of vehicle support frame, there is only a single central telescopic arm (11) (figure 6) actuated by a single cylinder (12). The telescopic arm(s) slide under the vehicle which has broken down or had an accident (13), being adjusted to the most suitable point where the chassis can be anchored by chains, avoiding interference with air boilers, diesel tanks, fuel tanks, etc.

To perform the operation of placing the chains (14) from the end(s) of the telescopic bar(s) (11) to the chassis of the broken down vehicle (13), and thus be able to lift the front or rear axle (only if it refers to the case of the new variant) of the broken down vehicle, the vehicle support frame (10) has tilt legs (15) which, as their name indicates, allows this frame to tilt on them to approximate the point(s) of the telescopic bar(s) to the chassis of the broken down vehicle and anchoring it with chains and then distancing the point(s) of the chassis and, in this way, tightening the chains (14) at the same time managing to lift the front or rear axle of the broken down vehicle (13) which is resting on the frame (10). This manoeuvre of approximation and distancing is performed with the actuation of the hydraulic cylinders.

The vehicle support frame also has adjustable supports (16) to position to wheels of the front axle of the vehicle to be towed (13). In the case of the new variant of the vehicle support frame, i.e. the one which has a single telescopic arm (11) in the centre, the adjustable supports (16) have the sufficient width to position the dual wheels of a truck rear axle. In this way, it is possible to choose between attaching the vehicle (13) by lifting the front axle, or by lifting the rear axle. The wheel supports (16) guarantee that the vehicle that is going to be towed (13) is perfectly immobilized and anchored to the frame of the towing mechanism (10), and that it will not move in the event of sharp acceleration or braking.

The outer width defined between the wheel supports (16) can be increased or decreased in accordance with the width of the front axle of the vehicle to be towed. In the event of a new variant of a single telescopic bar and in the centre, the inner width of the supports (16) can also be increased or decreased in accordance with whether a single wheel or dual wheel axle is positioned on them. Thus, in both cases, the length of the housing of each adjustable support can also be modified, placing the anchor rods (17) at one point or another, as suitable.

To position the front axle of the vehicle to be towed (13) on the support frame (10), firstly perforated anchor rods (17) are removed from wheels of the axle of the vehicle to be towed. Next, the width is adjusted between the adjustable supports (16) until the width of the axle of the vehicle to be towed, next, the towing mechanism is approximated until the wheels of the front axle of the broken down vehicle (13) abut against the adjustable supports (16) of the wheels. This operation can be performed with the aid of the hoist gear (18) which is located in the front part of the vehicle support frame (10), since they are slow, precise movements. Once the wheels occupy the required position, the perforated anchor rods (17) are again positioned and immobilized by safety pins. In this way, the wheels of the vehicle to be towed fit into the adjustable supports (16) of the vehicle support frame (10).

The aforementioned pull rods (4) and supports (5) prevent the towing mechanism collapsed in the transport position, from rotating and tilting on the fifth wheel, making the device immobilized and in horizontal position.

The rear supports (5) are calculated to support alone the weight of the towing mechanism in the position of maximum extension. The rear supports (5) are formed by first pieces screwed to the chassis, and second pieces coupled to the first pieces in telescopic manner, fixing the position at a height selected by a pin. The first pieces are specifically dimensioned for each case. Once positioned they remain fixed, since they do not interfere in the functioning of the towing mechanism, nor in other uses (carrying semitrailers) in which the tractor trailer (3) may be involved.

To release the towing mechanism from the fastening means, first the pull rods (4) are removed, the towing mechanism remaining in horizontal position by the rear supports (5). Next, the rear supports (5) are removed. To perform this operation, it is necessary to rest the end of the vehicle support frame (10) on the ground to produce a rotation of the whole assembly on the fifth wheel, which permits extracting the pins from the rear supports (5) to thus be able to lower said rear supports (5), remaining in the position that can be observed in figure 4.

The towing mechanism has a brake system to connect to the vehicle to be towed. This system guarantees that the wheels of the broken down vehicle which run on the road, brake together when the brake pedal of the tractor trailer is pressed (3). This system is essential to perform a towing operation with total security. In this way it is possible to descend mountain passes with the peace of mind that the broken down vehicle (13) is not going to take over the tractor trailer (3), since the whole unit will brake at the same time once the brake of the tractor trailer (3) is actuated.

Said brake system is provided with the towing mechanism comprising:
- A service brake circuit.
- A parking brake circuit.

Using two hoses, one of them feeding the parking brake circuit to unlock and the other feeding the service brake circuit to brake, and a series of adapters connected in the pneumatic air distribution valves to the actuators, it is achieved that the wheels of the vehicle which has broken down or had an accident (13), which run on the road, brake together when the brake pedal of the tractor trailer is pressed.

If hoses cannot be connected to the service brake and parking brake circuits respectively, the chambers of the service brake and parking brake of each one of the actuators of the wheels of the broken down vehicle (13), which run on the road, should be fed directly with air. In the parking brake chamber, the air hose, which is introducing air permanently to unblock, will be connected. In the service brake chamber, the air hose will be connected which will introduce air sporadically, i.e. at the time when the brake of the tractor trailer (3) is pressed.

Both hoses are connected to the quick connectors on either side of the brackets on the rear part of the main frame (1). The brake system includes a series of adapters and auxiliary hoses to permit all the connections that need to be made in the installation of the brake circuit of the broken down vehicle.

For the particular case that the vehicle to be towed has two rear axles, and the latter is a lifting load axle, i.e. an axle which is raised (without touching the ground) when the vehicle is unloaded, it will only be necessary to feed its actuators for this axle with the service brake air hose, since they have no parking brake air chamber.

As has already been explained, using the tilt legs (15) and actuating the pair of hydraulic cylinders (9) it is possible to perform the fastening manoeuvre of the chassis of the broken down vehicle (13) to the support frame (10).

Below, we describe the steps necessary to carry out the manoeuvre, thus showing the important function of the tilt legs (15):
1. Extracting the tilt legs (15) located in front of the adjustable supports (16) of the wheels. To be able to extend the tilt legs, it will be necessary to rest the end of the vehicle support frame (10) on the ground. This will be achieved by acting on the pair of cylinders (9) (Extracting the rods)
2. Once the tilt legs (15) are on the ground, the reverse manoeuvre is performed, i.e. the support frame is again supported (10) in a horizontal position tilting then on the tilt legs (15). This is achieved by acting on the pair of cylinders (9) (Collapsing the rods). In this phase, the axle of the broken down vehicle positioned on the adjustable supports (16) is raised.
3. In this position, the telescopic arm(s) is/are extended to a position wherein chains (14) can be passed to anchor the chassis of the broken down vehicle (13), without these interfering in any element such as fuel tanks, exhaust pipe, air boilers, pipes and others. The movement of each telescopic arm (11) is performed by the hydraulic cylinders (12), which are independent, which permits extending each telescopic arm (11) separately to be able to leave them at different lengths, although whenever possible, it will be attempted that both arms (11) are the same length. In the case of the new variant of a single central telescopic arm (11) and with a single cylinder extension (12) shown in figure 6, the 2 crossbeams of the chassis of the broken down vehicle (13) can also be anchored to this single profile by chains. At the end of this profile, 2 side rings are located where the chains of one side and the other are fastened.
4. The ends of the telescopic arms (11) will be approximated as much as possible to the chassis, always with the precaution that no interference is produced with any other element. This manoeuvre is performed by again acting on the pair of cylinders (9) (Collapsing the rods).
5. Once the location of the fastening point has been determined, each one of the crossbeams of the chassis of the broken down vehicle (13) will be anchored to the end(s) of the telescopic arm(s) by standardized chains of 10 mm thickness and working load limit of 3200 kg in direct pull.
6. The fastening chains will be tightened, distancing the end(s) of the telescopic arm(s) from the chassis of the broken down vehicle (13) acting for this purpose on the pair of hydraulic cylinders (9) (Extracting the rods). Once the assembly has been stiffened and raised thanks to the action of the chains (14), the tilt legs (15) will be collapsed.

Once the vertical frame has been height-adjusted, by holes (19), this height is locked by pins so that the hydraulic cylinders (7), despite having safety valves, suffer no damage.

In the same way, once the chains have been tightened and thus the axle raised of the broken down vehicle which rests on the adjustable supports, and establishing as definitive the position of the vehicle support frame (10) with respect to the vertical frame (8) by holes (20) of the telescopic bar, this position is immobilized by means of a pin so that the hydraulic cylinders (9), despite having safety valves, suffer no damage.

There is an electric pump to actuate the hydraulic equipment operated by the batteries of the tractor trailer or by the power supply and pump installed therein.

The control and command system (21) of the hydraulic cylinders and hoist gear which can be actuated manually or by remote control by cable or radio is mounted on the main frame.

## Claims

1. A towing mechanism of industrial vehicles configured to be applied to the fifth wheel of a tractor trailer (3) to tow a broken down vehicle (13) via the wheels of one axle of the broken down vehicle (13) which has: a main frame (1) which has a kingpin (2) to be attached to the tractor trailer (3), and a support frame (10) to support the broken down vehicle (13), said support frame (10) being articulated on the main frame (1), which comprises adjustable supports (16) to position the wheels of the axle of the broken down vehicle (13) increasing/decreasing a defined width between the adjustable supports (16) to adapt said width to that of the axle of the broken down vehicle (13); increasing/decreasing a defined length between a front portion and a rear portion in each adjustable support (16) to adapt said length to the diameter of the wheel of the broken down vehicle (13), wherein said mechanism comprises a brake system to connect to the towed vehicle (13) said brake system comprising: an air circuit for parking brake; an air circuit for service brake, **characterized in that** the brake system comprises a plurality of hoses and adapters to be connected to parking and service brake circuits of the broken down vehicles (13) and a plurality of hoses and adapters to be directly connected to wheel actuators of the broken down vehicle (13) which run on the road during the towing.

2. The mechanism according to claim 1, **characterized in that** it further comprises a frame vertical (8) between the main frame (1) and the support frame (10) joined in tilting manner to the main frame (1) and to the support frame (10) to allow the mechanism to be transported in a folded position.

3. The mechanism according to any of the preceding claims, **characterized in that** the support frame (10) comprises at least one telescopic arm, which is displaced under a frame of a broken down vehicle to anchor the broken down vehicle (13).

4. The mechanism according to any of the preceding claims, **characterized in that** it has a hoist gear (18), located in the front part of the support frame (10) for auxiliary towing tasks

5. The mechanism according to Claim 2, **characterized in that** the vertical frame (8) has a vertical movement, to enable a height-adjustment of the support frame (10).

6. The mechanism according to any of the preceding claims, **characterized in that** it comprises a command and control system of the actuating means positioned on the mechanism, preferably on the main frame, to constitute an autonomous system.

7. The mechanism according to any of the preceding claims, **characterized in that** the towing mechanism comprises fastening means to remain fastened in working order, said means comprising: front rods (4) to fix the mechanism by a front part to a chassis of the tractor trailer (3); rear supports (5) fixed to a rear part of the chassis of the tractor trailer (3) so that the main frame (1) rests on said rear part of the chassis.

8. The mechanism according to any of the preceding claims, **characterized in that** the support frame (10) has a plurality of tilt legs (15) to allow the broken down vehicle (13) be loaded on the support frame (10).

## Patentansprüche

1. Abschleppmechanismus von gewerblichen Fahrzeugen, eingerichtet zur Anwendung an dem fünften Rad eines Zugfahrzeugs (3), um ein liegengebliebenes Fahrzeug (13) über die Räder einer Achse des liegengebliebenen Fahrzeugs (13) abzuschleppen, mit: einem Hauptrahmen (1), der einen Königszapfen (2) aufweist, zur Befestigung an dem Zugfahrzeug (3), und einem Tragrahmen (10) zum Abstützen des liegengebliebenen Fahrzeugs (13), wobei der Tragrahmen (10) an dem Hauptrahmen (1) gelenkig gelagert ist, wobei dieser einstellbare Stützen (16) aufweist, um die Räder der Achse des liegengebliebenen Fahrzeugs (13) zu positionieren, wobei eine definierte Breite zwischen den einstellbaren Trägern (16) zunehmend oder abnehmend eingestellt wird, um die genannte Breite an die der Achse des liegengebliebenen Fahrzeugs (13) anzupassen; wobei zunehmend oder abnehmend eine definierte Länge zwischen einem vorderen Abschnitt und einem hinteren Abschnitt in jedem einstellbaren Träger (16) eingestellt wird, um die genannte Länge an den Durchmesser des Rades des liegengebliebenen Fahrzeugs (13) anzupassen, wobei der genannte Mechanismus ein Bremssystem zum Anschluss an das abgeschleppte Fahrzeug (13) aufweist, wobei das genannte Bremssystem umfasst: einen Luftkreis als Handbremse und einen Luftkreis als Betriebsbremse, **dadurch gekennzeichnet, dass** das Bremssystem eine Anzahl von Schläuchen und Adaptern aufweist, um an die Hand- und Betriebsbremskreise des liegengebliebenen Fahrzeugs (13) angeschlossen zu werden, und eine Anzahl an Schläuchen und Adaptern, um unmittelbar mit Radbetätigungen des liegengebliebenen Fahrzeugs (13) angeschlossen zu werden, die beim Abschleppen auf der Straße laufen.

2. Mechanismus nach Anspruch 1, **dadurch gekennzeichnet, dass** er weiterhin ein vertikales Rahmenelement (8) zwischen dem Hauptrahmen (1) und dem Tragrahmen (10) aufweist, das in einer kippbaren Art und Weise mit dem Hauptrahmen (1) und dem Tragrahmen (10) verbunden ist, um zu ermöglichen, dass der Mechanismus in einer gefalteten Position transportiert wird.

3. Mechanismus nach einem der vorangehenden Ansprüche, **dadurch gekennzeichnet, dass** der Tragrahmen (10) zumindest einen Teleskoparm aufweist, der unter einen Rahmen eines liegengebliebenen Fahrzeugs verlagert wird, um das liegengebliebenen Fahrzeug (13) zu verankern.

4. Mechanismus nach einem der vorangehenden Ansprüche, **dadurch gekennzeichnet, dass** er eine Winde (18) aufweist, die in dem vorderen Abschnitt des Tragrahmens (10) für zusätzliche Abschleppaufgaben angeordnet ist.

5. Mechanismus nach Anspruch 2, **dadurch gekennzeichnet, dass** der vertikale Rahmen (8) eine vertikale Bewegung aufweist, um eine Höheneinstellung des Tragrahmens (10) zu ermöglichen.

6. Mechanismus nach einem der vorangehenden Ansprüche, **dadurch gekennzeichnet, dass** er ein Steuer- und Kontrollsystem der Betätigungseinrichtungen, die auf dem Mechanismus angeordnet sind, aufweist, vorzugsweise auf dem Hauptrahmen, um ein autonomes System zu bilden.

7. Mechani nach einem der vorangehenden Ansprüche, **dadurch gekennzeichnet, dass** der Abschleppmechanismus Befestigungsmittel aufweist, um in einer Arbeitsreihenfolge befestigt zu bleiben, wobei die genannten Mittel umfassen:
vordere Stangen (4), um den Mechanismus über einen vorderen Abschnitt an einem Fahrgestell des Zugfahrzeugs (3) zu befestigen; hintere Träger (5), die an einem hinteren Abschnitt des Fahrgestells des Zugfahrzeugs (3) befestigt sind, so dass der Hauptrahmen (1) auf dem genannten hinteren Abschnitt des Fahrgestells aufliegt.

8. Mechanismus nach einem der vorangehenden Ansprüche, **dadurch gekennzeichnet, dass** der Tragrahmen (10) eine Anzahl von Kippschenkeln (15) aufweist, um zu ermöglichen, dass das liegengebliebene Fahrzeug (13) auf den Tragrahmen (10) geladen wird.

## Revendications

1. Mécanisme de remorquage de véhicules industriels configuré pour être appliqué à la cinquième roue d'un tracteur semi-remorque (3) pour remorquer un véhicule en panne (13) via les roues d'un essieu du véhicule en panne (13) qui comprend : un châssis principal (1) qui a un pivot d'attelage (2) à attacher au tracteur semi-remorque (3), et un châssis de support (10) pour supporter le véhicule en panne (13), ledit châssis de support (10) étant articulé sur le châssis principal (1), qui comprend des supports réglables (16) pour positionner les roues de l'essieu du véhicule en panne (13) augmentant/diminuant une largeur définie entre les supports réglables (16) pour adapter ladite largeur à celle de l'essieu du véhicule en panne (13) ; augmentant/diminuant une longueur définie entre une partie avant et une partie arrière de chaque support réglable (16) pour adapter ladite longueur au diamètre de la roue du véhicule en panne (13), ledit mécanisme comprenant un système de frein à connecter au véhicule remorqué (13), ledit système de frein comprenant : un circuit pneumatique pour le frein de stationnement ; un circuit pneumatique pour le frein de service, **caractérisé en ce que** le système de frein comprend une pluralité de tuyaux et d'adaptateurs à connecter sur les circuits de frein de stationnement et de service du véhicule en panne (13) et une pluralité de tuyaux et d'adaptateurs à connecter directement aux actionneurs des roues du véhicule en panne (13) qui sont sur la route durant le remorquage.

2. Le mécanisme de la revendication 1, **caractérisé en ce qu'**il comporte en outre un châssis vertical (8) entre le châssis principal (1) et le châssis de support (10) reliée de manière basculante au châssis principal (1) et au châssis de support (10) pour permettre au mécanisme d'être transporté dans une position pliée.

3. Le mécanisme selon l'une quelconque des revendications précédentes, **caractérisé en ce que** le châssis de support (10) comprend au moins un bras télescopique, qui est déplacé sous un châssis d'un véhicule en panne pour accrocher le véhicule en panne (13).

4. Le mécanisme selon l'une quelconque des revendications précédentes, **caractérisé en ce qu'**il a un treuil (18), au niveau de la partie avant du châssis de support (10) pour des tâches auxiliaires de remorquage.

5. Le mécanisme selon la revendication 2, **caractérisé en ce que** le châssis vertical (8) a un mouvement vertical, pour permettre un ajustement en hauteur du châssis de support (10).

6. Le mécanisme selon l'une quelconque des revendications précédentes, **caractérisé en ce qu'**il comprend un système de commande et de contrôle des moyens d'actionnement positionnés sur le mécanisme, de préférence sur le châssis principal, pour former un système autonome.

7. Le mécanisme selon l'une quelconque des revendications précédentes, **caractérisé en ce que** le mécanisme de remorquage comprend des moyens d'attache pour rester attachés en état de marche, lesdits moyens comprenant : des tiges avant (4) pour fixer le mécanisme part une partie avant à un châssis du tracteur semi-remorque (3) ; des supports arrière (5) fixés à une partie arrière du châssis du tracteur semi-remorque (3) de telle sorte que le châssis principal (1) repose sur ladite partie arrière du châssis.

8. Le mécanisme selon l'une quelconque des revendications précédentes, **caractérisé en ce que** le châssis support (10) a une pluralité de béquilles basculantes (15) pour permettre au véhicule en panne (13) d'être chargé sur le châssis de support (10).
